(19) **Europäisches Patentamt**
**European Patent Office**
**Office européen des brevets**

(11) **EP 4 386 048 A1**

(12) **EUROPEAN PATENT APPLICATION**
published in accordance with Art. 153(4) EPC

(43) Date of publication:
**19.06.2024 Bulletin 2024/25**

(21) Application number: **22876912.1**

(22) Date of filing: **29.09.2022**

(51) International Patent Classification (IPC):
*C08L 51/04* (2006.01)    *C08L 101/00* (2006.01)
*C08K 5/132* (2006.01)    *C08K 5/3475* (2006.01)

(52) Cooperative Patent Classification (CPC):
**C08K 5/132; C08K 5/3475; C08L 25/08;
C08L 33/06; C08L 33/20; C08L 51/04;
C08L 101/00;** Y02W 30/62

(86) International application number:
**PCT/KR2022/014683**

(87) International publication number:
**WO 2023/055140 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2021 KR 20210130840**

(71) Applicant: **LG Chem, Ltd.
Yeongdeungpo-gu
Seoul 07336 (KR)**

(72) Inventors:
• **OK, Hye Jeong
Daejeon 34122 (KR)**
• **JANG, Seok Goo
Daejeon 34122 (KR)**
• **SHIM, Hyung Seop
Daejeon 34122 (KR)**
• **NAM, Ki Young
Daejeon 34122 (KR)**

(74) Representative: **Plasseraud IP
66, rue de la Chaussée d'Antin
75440 Paris Cedex 09 (FR)**

(54) **TRANSPARENT RESIN COMPOSITION AND MOLDED ARTICLE**

(57)    The present invention relates to a transparent resin composition that includes a transparent matrix resin containing a chemically recycled monomer unit to reduce carbon emissions so as to be eco-friendly and have excellent mechanical properties and weather resistance, and a molded article formed therefrom.

**EP 4 386 048 A1**

**Description**

## TECHNICAL FIELD

### Cross-reference to Related Application

This application claims the benefit of Korean Patent Application No. 10-2021-0130840, filed on October 1, 2021, in the Korean Intellectual Property Office, the disclosure of which is incorporated herein in its entirety by reference.

### Technical Field

The present invention relates to a transparent resin composition that includes a matrix resin containing a chemically recycled monomer unit to reduce carbon emissions so as to be eco-friendly and have excellent mechanical properties and weather resistance, and a molded article formed therefrom.

## BACKGROUND ART

Eco-friendly policies and regulations have been reinforced worldwide. In particular, ways of recycling plastic waste have been suggested to reduce carbon emissions, and most notably, post consumer recycled (PCR) materials are being researched and developed.

PCR materials are not simply low cost recycled materials designed to reduce costs, but materials that may benefit the environment as discarded products are recycled after being used by consumers. Ways of recycling as a PCR material are largely divided into mechanical recycling and chemical recycling.

The mechanical recycling is a way of recycling by crushing and washing plastic waste, and sorting out foreign substances and metals is the key to this recycling. The mechanical recycling significantly reduces carbon due to low consumption of thermal energy upon mechanical decomposition for recycling, but is not virtually able to remove all foreign substances and metals even with the sorting upon recycling, leading to deterioration in quality compared to virgin materials and hardly securing uniformity of quality. In particular, for a transparent resin applied to products requiring transparency, when foreign substances and metals are mixed upon recycling, transparency may be deteriorated.

The chemical recycling is a way of recycling using a chemical method that decomposes the molecular structure of plastic itself and returns the plastic as a pure raw material, and recently, the development of this recycling technology is accelerated. The chemical recycling generates pure raw materials through recycling, and may thus achieve the same level of quality as virgin materials upon recycling compared to the mechanical recycling.

Meanwhile, when a transparent resin is used outdoors or is steadily exposed to external light even when used indoors, without securing sufficient weather resistance, transparency is deteriorated. Therefore, in the transparent resin, what is important is to ensure weather resistance.

[Related Art Document]

[Patent Document]

(Patent Document 1) KR 10-2012-0088090 A

## DISCLOSURE OF THE INVENTION

### TECHNICAL PROBLEM

A task to be solved in the present invention to overcome the limitations described above in the background art is, using a PCR material as a transparent resin, to provide eco-friendliness, to secure the same level of mechanical properties as virgin materials and to improve weather resistance.

That is, an aspect of the present invention provides a transparent resin composition that includes a matrix resin containing a chemically recycled monomer unit to reduce carbon emissions so as to be eco-friendly and have excellent mechanical properties and weather resistance, and a molded article formed therefrom.

### TECHNICAL SOLUTION

In order to address the above-described tasks, the present invention provides a transparent resin composition and a molded article.

(1) According to an aspect of the present invention, there is provided a transparent resin composition including: a transparent graft copolymer including a rubber polymer; a transparent matrix resin; and a UV absorber, wherein the transparent matrix resin includes a chemically recycled alkyl (meth)acrylate-based monomer unit, and the UV absorber includes at least one selected from the group consisting of a benzophenone-based UV absorber and a benzotriazole-based UV absorber.

(2) The present invention provides the transparent resin composition according to (1) above, wherein the transparent graft copolymer includes a conjugated diene-based rubber polymer, an alkyl (meth)acrylate-based monomer unit, an aromatic vinyl-based monomer unit, and a vinyl cyan-based monomer unit.

(3) The present invention provides the transparent resin composition according to (1) or (2) above, wherein the transparent graft copolymer is in an amount of 5 parts by weight to 60 parts by weight with respect to 100 parts by weight of a total amount of the transparent graft copolymer and the transparent matrix resin.

(4) The present invention provides the transparent resin composition according to (1) to (3) above, wherein the transparent matrix resin is in an amount of 40 parts by weight to 95 parts by weight with respect to 100 parts by weight of a total amount of the transparent graft copolymer and the transparent matrix resin.

(5) The present invention provides the transparent resin composition according to (1) to (4) above, wherein the transparent matrix resin includes a first transparent matrix resin and a second transparent matrix resin, and the second transparent matrix resin includes a chemically recycled alkyl (meth)acrylate-based monomer unit.

(6) The present invention provides the transparent resin composition according to (5) above, wherein the first transparent matrix resin includes an alkyl (meth)acrylate-based monomer unit, an aromatic vinyl-based monomer unit, and a vinyl cyan-based monomer unit.

(7) The present invention provides the transparent resin composition according to (5) or (6) above, wherein the second transparent matrix resin includes a chemically recycled alkyl (meth)acrylate-based monomer unit, an aromatic vinyl-based monomer unit, and a vinyl cyan-based monomer unit.

(8) The present invention provides the transparent resin composition according to (5) to (7) above, wherein the first transparent matrix resin is in an amount of 10 parts by weight to 70 parts by weight with respect to 100 parts by weight of a total amount of the transparent graft copolymer and the transparent matrix resin, and the second transparent matrix resin is in an amount of 10 parts by weight to 80 parts by weight with respect to 100 parts by weight of a total amount of the transparent graft copolymer and the transparent matrix resin.

(9) The present invention provides the transparent resin composition according to (1) to (8) above, wherein a chemically recycled alkyl (meth)acrylate-based monomer forming the chemically recycled alkyl (meth)acrylate-based monomer unit is chemically recycled from waste artificial marble.

(10) The present invention provides the transparent resin composition according to (1) to (9) above, wherein the benzophenone-based UV absorber is at least one selected from the group consisting of 2-hydroxy-4-(octyloxy)benzophenone and 2,2'-dihydroxy-4-methoxybenzophenone.

(11) The present invention provides the transparent resin composition according to (1) to (10) above, wherein the benzotriazole-based UV absorber is 2-(2-hydroxy-5-tert-octylphenyl)benzotriazole.

(12) The present invention provides the transparent resin composition according to (1) to (11) above, wherein the UV absorber is in an amount of 0.01 parts by weight to 1.00 parts by weight with respect to 100 parts by weight of a total amount of the transparent graft copolymer and the transparent matrix resin.

(13) According to another aspect of the present invention, there is provided a molded article molded from the transparent resin composition according to any one of (1) to (12) above.

## ADVANTAGEOUS EFFECTS

A transparent resin composition according to the present invention includes a matrix resin containing a chemically recycled monomer unit to reduce carbon emissions so as to be eco-friendly and have excellent mechanical properties and weather resistance.

## MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The term "monomer unit" as used herein may refer to a component, a structure, or a material itself resulting from each monomer, and specifically, may refer to a repeating unit constituted in a polymer when monomers to be added participate in a polymerization reaction upon polymerizing the polymer.

The term "composition," as used herein includes reaction products and decomposition products formed from materials of the composition as well as a mixture of materials including the composition.

The present invention provides a transparent resin composition including a PCR material. In the present invention, the PCR material refers to a PCR material according to a chemical recycling method using a chemically recycled monomer.

According to an embodiment of the present invention, the transparent resin composition may include a transparent graft copolymer containing a rubber polymer, a transparent matrix resin, and a UV absorber, the transparent matrix resin may include a chemically recycled alkyl (meth)acrylate-based monomer unit, and the UV absorber may include at least one selected from the group consisting of a benzophenone-based UV absorber and a benzotriazole-based UV absorber.

According to an embodiment of the present invention, the transparent resin composition is characterized by including a transparent matrix resin as a PCR material. As such, when the transparent matrix resin is included as a PCR material, emissions of carbon dioxide as a greenhouse gas may be reduced, and the resulting carbon emission reduction is beneficial for the environment compared to a case where a transparent matrix resin, which is a virgin material, is used alone.

The conjugated diene-based rubber polymer described in the present invention may be a rubber polymer including a conjugated diene-based monomer unit, and specifically a conjugated diene-based monomer forming the conjugated diene-based monomer unit may be at least one selected from the group consisting of 1,3-butadiene, 2,3-dimethyl-1,3-butadiene, piperylene, 3-butyl-1,3-octadiene, isoprene, and 2-phenyl-1,3-butadiene, and more specifically may be 1,3-butadiene.

An alkyl (meth)acrylate-based monomer for forming the alkyl (meth)acrylate-based monomer unit described in the present invention may be an alkyl (meth)acrylate having 1 to 18 carbon atoms, an alkyl (meth)acrylate having 1 to 12 carbon atoms, or an alkyl (meth)acrylate having 1 to 6 carbon atoms. In the case, (meth)acrylate may refer to acrylate or methacrylate. The alkyl (meth)acrylate-based monomer having 1 to 18 carbon atoms may be methyl (meth) acrylate, specifically methyl methacrylate. In addition, the alkyl (meth)acrylate-based monomer may be a virgin monomer or a chemically recycled monomer, but may refer to a virgin monomer unless specifically indicated as a chemically recycled monomer.

An aromatic vinyl-based monomer for forming the aromatic vinyl-based monomer unit described in the present invention may be at least one selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene, and specifically may be styrene.

A vinyl cyan-based monomer for forming the vinyl cyan-based monomer unit described in the present invention may be at least one selected from the group consisting of acrylonitrile, methacrylonitrile, ethacrylonitrile, phenylacrylonitrile, and α-chloroacrylonitrile, and specifically may be acrylonitrile.

According to an embodiment of the present invention, the transparent graft copolymer may include a conjugated diene-based rubber polymer, an alkyl (meth)acrylate-based monomer unit, an aromatic vinyl-based monomer unit, and a vinyl cyan-based monomer unit. Specifically, the transparent graft copolymer may be one obtained through graft polymerization of an alkyl (meth)acrylate-based monomer, an aromatic vinyl-based monomer, and a vinyl cyan-based monomer to a conjugated diene-based rubber polymer, and may have a core-shell structure, and in this case, the core may include the conjugated diene-based rubber polymer, and the shell may include an alkyl (meth)acrylate-based monomer unit, an aromatic vinyl-based monomer unit, and a vinyl cyan-based monomer unit.

According to an embodiment of the present invention, the conjugated diene-based rubber polymer of the transparent graft copolymer may be included in an amount of 30 wt% or greater, 35 wt% or greater, 40 wt% or greater, or 45 wt% or greater, and also 70 wt% less, 65 wt% less, 60 wt% less, or 55 wt% less, with respect to the transparent graft copolymer, and within this range, a transparent resin composition has excellent mechanical properties.

According to an embodiment of the present invention, the alkyl (meth)acrylate-based monomer unit of the transparent graft copolymer may be included in an amount of 10 wt% or greater, 15 wt% or greater, 20 wt% or greater, 25 wt% or greater, or 30 wt% or greater, and also 50 wt% less, 45 wt% less, 40 wt% less, or 35 wt% less, with respect to the transparent graft copolymer, and within this range, compatibility with a transparent matrix resin is excellent, and transparency and mechanical properties are excellent.

According to an embodiment of the present invention, the alkyl (meth)acrylate-based monomer unit of the transparent graft copolymer may be formed from a virgin alkyl (meth)acrylate-based monomer and/or a chemically recycled alkyl (meth)acrylate-based monomer, and when a monomer unit formed from a chemically recycled alkyl (meth)acrylate-based monomer is included, it may further benefit the environment.

According to an embodiment of the present invention, the aromatic vinyl-based monomer of the transparent graft copolymer may be included in an amount of 1 wt% or greater, 3 wt% or greater, 5 wt% or greater, or 10 wt% or greater, and also 30 wt% less, 25 wt% less, 20 wt% less, or 15 wt% less, with respect to the transparent graft copolymer, and within this range, compatibility with a transparent matrix resin is excellent, and transparency and mechanical properties are excellent.

According to an embodiment of the present invention, the vinyl cyan-based monomer unit of the transparent graft copolymer may be included in an amount of 1 wt% or greater, 2 wt% or greater, 3 wt% or greater, 4 wt% or greater, or 5 wt% or greater, and also 20 wt% less, 15 wt% less, 10 wt% less, or 8 wt% less, with respect to the transparent graft copolymer, and within this range, compatibility with a transparent matrix resin is excellent, and transparency and mechanical properties are excellent.

According to an embodiment of the present invention, the transparent graft copolymer may have a refractive index of 1.500 or greater, 1.505 or greater, 1.510 or greater, or 1.515 or greater, and also 1.530 or less, 1.525 or less, 1.520 or less, or 1.518 or less. In this case, the refractive index may be measured using an Abbe refractometer.

According to an embodiment of the present invention, in the transparent resin composition, the transparent graft copolymer may be in an amount of 5 parts by weight to 60 parts by weight with respect to 100 parts by weight of a total amount of the transparent graft copolymer and the transparent matrix resin. Specifically, the transparent graft copolymer may be in an amount of 5 parts by weight or greater, 10 parts by weight or greater, 15 parts by weight or greater, 20 parts by weight or greater, or 25 parts by weight or greater, and also 60 parts by weight or less, 55 parts by weight or less, 50 parts by weight or less, 45 parts by weight or less, 40 parts by weight or less, or 35 parts by weight or less, with respect to 100 parts by weight of the total amount of the transparent graft copolymer and the transparent matrix resin, and within this range, color, processability, and mechanical properties of the transparent resin composition may be regulated according to the amount of the rubber polymer included in the graft copolymer.

According to an embodiment of the present invention, the transparent matrix resin may include a chemically recycled alkyl (meth)acrylate-based monomer unit, and may specifically include a chemically recycled alkyl (meth)acrylate-based monomer unit, an aromatic vinyl-based monomer unit, and a vinyl cyan-based monomer unit.

According to an embodiment of the present invention, the chemically recycled alkyl (meth)acrylate-based monomer unit of the transparent matrix resin may be included in an amount of 50 wt% or greater, 55 wt% or greater, 60 wt% or greater, 65 wt% or greater, or 58 wt% or greater, and also 80 wt% less, 75 wt% less, 70 wt% less, or 69 wt% less, with respect to the transparent matrix resin, and within this range, compatibility with a transparent graft copolymer is excellent, and transparency and mechanical properties are excellent.

According to an embodiment of the present invention, the aromatic vinyl-based monomer unit of the transparent matrix resin may be included in an amount of 5 wt% or greater, 10 wt% or greater, 15 wt% or greater, or 20 wt% or greater, and also 40 wt% less, 35 wt% less, 30 wt% less, or 25 wt% less, with respect to the transparent matrix resin, and within this range, compatibility with a transparent graft copolymer is excellent, and transparency and mechanical properties are excellent.

According to an embodiment of the present invention, the vinyl cyan-based monomer unit of the transparent matrix resin may be included in an amount of 1 wt% or greater, 2 wt% or greater, 3 wt% or greater, 4 wt% or greater, or 5 wt% or greater, and also 20 wt% less, 15 wt% less, 10 wt% less, or 8 wt% less, with respect to the transparent matrix resin, and within this range, compatibility with a transparent graft copolymer is excellent, and transparency and mechanical properties are excellent.

According to an embodiment of the present invention, the transparent matrix resin may have a refractive index of 1.500 or greater, 1.505 or greater, 1.510 or greater, or 1.515 or greater, and also 1.530 or less, 1.525 or less, 1.520 or less, or 1.518 or less. In this case, the refractive index may be measured using an Abbe refractometer.

According to an embodiment of the present invention, in the transparent resin composition, the transparent matrix resin may be in an amount of 40 parts by weight to 95 parts by weight with respect to 100 parts by weight of a total amount of the transparent graft copolymer and the transparent matrix resin. Specifically, the transparent matrix resin may be in an amount of 40 parts by weight or greater, 45 parts by weight or greater, 50 parts by weight or greater, 55 parts by weight or greater, 60 parts by weight or greater, or 65 parts by weight or greater, and also 95 parts by weight or less, 90 parts by weight or less, 85 parts by weight or less, 80 parts by weight or less, or 75 parts by weight or less, with respect to 100 parts by weight of a total amount of the transparent graft copolymer and the transparent matrix resin, and within this range, color, processability, and mechanical properties of the transparent resin composition may be regulated according to the amount of the rubber polymer included in the graft copolymer.

According to an embodiment of the present invention, the transparent matrix resin may include a first transparent matrix resin and a second transparent matrix resin, and the second transparent matrix resin may include a chemically recycled alkyl (meth)acrylate-based monomer unit. Specifically, the first transparent matrix resin may include an alkyl (meth)acrylate-based monomer unit, an aromatic vinyl-based monomer unit, and a vinyl cyan-based monomer unit, and the second transparent matrix resin may include a chemically recycled alkyl (meth)acrylate-based monomer unit, an aromatic vinyl-based monomer unit, and a vinyl cyan-based monomer unit. In this case, transparency and mechanical properties of the transparent resin composition from the first matrix resin including a virgin alkyl (meth)acrylate-based monomer unit may be further increased, and also eco-friendliness may be secured from the second matrix resin including the chemically recycled alkyl (meth)acrylate-based monomer unit.

According to an embodiment of the present invention, in the transparent resin composition, when the transparent matrix resin includes a first transparent matrix resin and a second transparent matrix resin, the first transparent matrix resin may be in an amount of 10 parts by weight to 70 parts by weight with respect to 100 parts by weight of a total amount of the transparent graft copolymer and the transparent matrix resin, and the second transparent matrix resin may be in an amount of 10 parts by weight to 80 parts by weight with respect to 100 parts by weight of a total amount of the transparent graft copolymer and the transparent matrix resin. Specifically, the first transparent matrix resin may be in an amount of 10 parts by weight or greater, 20 parts by weight or greater, 25 parts by weight or greater, or 30 parts by weight or greater, and also 70 parts by weight or less, 60 parts by weight or less, 50 parts by weight or less, or 40 parts by weight or less, with respect to 100 parts by weight of a total amount of the transparent graft copolymer and the transparent matrix resin. In addition, the second transparent matrix resin may be in an amount of 10 parts by weight or greater, 20 parts by weight or greater, 25 parts by weight or greater, or 30 parts by weight or greater, and also 80 parts by weight or less, 75 parts by weight or less, 70 parts by weight or less, 60 parts by weight or less, 50 parts by weight or less, or 40 parts by weight or less, with respect to 100 parts by weight of a total amount of the transparent graft copolymer and the transparent matrix resin. In this case, transparency and mechanical properties of the transparent resin composition from the first matrix resin including a virgin alkyl (meth)acrylate-based monomer unit may be further increased, and also eco-friendliness may be secured from the second matrix resin including the chemically recycled alkyl (meth)acrylate-based monomer unit.

According to an embodiment of the present invention, the chemically recycled alkyl (meth)acrylate-based monomer forming the chemically recycled alkyl (meth)acrylate-based monomer unit may be chemically recycled from waste artificial marble. Specifically, the chemically recycled alkyl (meth)acrylate-based monomer may be obtained by crushing waste artificial marble, and separating an alkyl (meth)acrylate compound, which is an alkyl (meth)acrylate-based monomer from aluminum hydroxide through thermal decomposition of the crushed waste artificial marble powder or granules. More specifically, aluminum hydroxide, water, and other impurities may be removed at a high temperature from pyrolyzate subjected to thermal decomposition of the waste artificial marble to obtain an alkyl (meth)acrylate compound. The obtained alkyl (meth)acrylate compound may be subjected to a distillation process through a distillation column to improve purity. As such, the chemically recycled alkyl (meth)acrylate-based monomer may have a purity of 95% or greater.

According to an embodiment of the present invention, even when the chemically recycled alkyl (meth)acrylate-based monomer has improved purity, some impurities are inevitably included compared to a virgin monomer, and these impurities cause deterioration in weather resistance of a transparent resin composition. Therefore, the transparent resin composition including a transparent matrix resin containing a chemically recycled alkyl (meth)acrylate-based monomer unit inevitably has deteriorated weather resistance compared to a transparent resin composition prepared using a virgin monomer alone, and to tackle this issue, what is needed is to include a UV absorber as in the present invention. However, for the transparent resin composition including a transparent matrix resin according to the present invention, since not all UV absorbers exhibit the same level of improvement in weather resistance, including a UV absorber which is particularly suitable for the transparent matrix resin according to the invention is critical. In general, UV absorbers applied to resins are organic UV absorbers such as benzophenone-based UV absorbers, benzotriazole-based UV absorbers, cyanoacrylate-based UV absorbers, formamidine-based UV absorbers, triazine-based UV absorbers, salicylic acid ester-based UV absorbers, and hindered amine-based UV absorbers (HALS), and inorganic UV absorbers such as nickel-based UV absorbers and cerium-based UV absorbers, but the inorganic UV absorbers cause deterioration in transparency of a transparent resin composition, and thus are not suitable to be applied to the transparent resin composition. Therefore, when excluding the inorganic UV absorbers and only considering the organic UV absorbers, when it comes to compatibility, colorability, and transparency, with respect to a transparent graft copolymer having low polarity and a transparent matrix resin, benzophenone-based UV absorbers, benzotriazole-based UV absorbers, and hindered amine-based UV absorbers are desirable, but the hindered amine-based UV absorbers (HALS) do not serve to block UV light through a screen effect, and thus do not provide a sufficient improvement in weather resistance in the transparent resin composition. Accordingly, the transparent resin composition of the present invention is characterized by including at least one UV absorber selected from the group consisting of a benzophenone-based UV absorber and a benzotriazole-based UV absorber as a UV absorber.

According to an embodiment of the present invention, the benzophenone-based UV absorber may be used without limitation as long as it is a commercially available benzophenone-based UV absorber, but considering compatibility with the transparent matrix resin according to the present invention, the benzophenone-based UV absorber may specifically be at least one selected from the group consisting of 2-hydroxy-4-(octyloxy)benzophenone and 2,2'-dihydroxy-4-methoxybenzophenone.

According to an embodiment of the present invention, the benzotriazole-based UV absorber may be used without limitation as long as it is a commercially available benzophenone-based UV absorber, but considering compatibility with the transparent matrix resin according to the present invention, the benzotriazole-based UV absorber may specifically be 2-(2-hydroxy-5-tert-octylphenyl)benzotriazole.

According to an embodiment of the present invention, in the transparent resin composition, the UV absorber may be in an amount of 0.01 parts by weight to 1.00 parts by weight with respect to 100 parts by weight of a total amount of the transparent graft copolymer and the transparent matrix resin. Specifically, the UV absorber may be in an amount of 0.01 parts by weight or greater, 0.05 parts by weight or greater, 0.10 parts by weight or greater, 0.20 parts by weight or greater, 0.30 parts by weight or greater, 0.40 parts by weight or greater, or 0.50 parts by weight or greater, and also 0.90 parts by weight or less, 0.80 parts by weight or less, 0.70 parts by weight or less, 0.60 parts by weight or less, or 0.50 parts by weight or less, with respect to 100 parts by weight of a total amount of the transparent graft copolymer and the transparent matrix resin, and within this range, in the transparent resin composition, deterioration in transparency and mechanical properties may be prevented, and weather resistance may be further improved.

The present invention provides a molded article molded from the transparent resin composition.

According to an embodiment of the present invention, the molded article may be a molded article extruded and/or injected using the transparent resin composition, and although the molded article may be exposed to external light, the molded article may be suitable for products requiring transparency.

Hereinafter, examples of the present invention will be described in detail in such a manner that it may easily be conducted by a person with ordinary skill in the art to which the present invention pertains. The invention may, however, be embodied in many different forms and should not be construed as being limited to the examples set forth herein.

**Preparation Example**

**Preparation Example 1: Preparation of graft copolymer**

A mixed solution including 100 parts by weight of ion-exchanged water, 32 parts by weight of methyl methacrylate, 11 parts by weight of styrene, 7 parts by weight of acrylonitrile, 0.04 parts by weight of cumene hydroperoxide, 1 part by weight of sodium dodecylbenzenesulfonate, 0.3 parts by weight of t-dodecyl mercaptan, 0.048 parts by weight of sodium formaldehyde sulfoxylate, 0.012 parts by weight of ethylenediaminetetraacetic acid, and 0.001 parts by weight of ferrous sulfate was prepared.

50 parts by weight (with respect to solid content) of butadiene rubber latex (average particle diameter: 300 nm, refractive index: 1.516, gel content: 70 wt%) was added to a nitrogen-substituted reactor, and the mixed solution was continuously added at a constant rate for 5 hours at 75 °C to perform polymerization. After the continuous input was completed, the temperature inside the reactor was raised to 80 °C before the resulting product was aged for 1 hour, and the polymerization was then terminated to obtain a graft copolymer latex containing a graft copolymer. In this case, the final polymerization conversion rate was 99%.

The prepared graft copolymer latex was aggregated with an aqueous calcium chloride solution, aged, washed, dehydrated, and dried to obtain graft copolymer powder. In this case, the prepared graft copolymer powder had a refractive index of 1.516.

**Preparation Example 2: Preparation of first matrix resin**

A mixed solution including 69 parts by weight of methyl methacrylate, 24 parts by weight of styrene, 7 parts by weight of acrylonitrile, 30 parts by weight of toluene, and 0.15 parts by weight of t-dodecyl mercaptan was prepared.

The mixed solution was continuously added to a nitrogen-substituted reactor at a constant rate such that the residence time was 3 hours, and the temperature of the reactor was maintained at 148 °C. The polymerization solution discharged from the reactor was heated in a preheating tank, and unreacted monomers were volatilized in a volatilization tank. Then, a first matrix resin was obtained in the form of a pellet through extrusion at 210 °C, using a polymer transfer pump extruder. In this case, the prepared first matrix resin pellet had a refractive index of 1.516.

**Preparation Example 3: Preparation of second matrix resin**

A second matrix resin was prepared in the same manner as in Preparation Example 2, except that from Preparation Example 2, methyl methacrylate obtained through chemical recycling from waste artificial marble in the same amount was used as methyl methacrylate. In this case, the prepared second matrix resin pellet had a refractive index of 1.516.

**Examples and Comparative Examples**

Each of the following components was blended with 0.5 parts by weight of lubricant and 0.25 parts by weight of antioxidant at the amounts shown in Tables 1 to 3, and the blended product was extruded using a twin-screw extrusion kneader at a cylinder temperature of 210 °C to prepare a transparent resin composition in the form of a pellet.

In this case, the amount of each component is with respect to 100 parts by weight of a total amount of a transparent graft copolymer and a transparent matrix resin.

(1) Graft copolymer: Graft copolymer prepared in Preparation Example 1
(2) First matrix resin: First matrix resin prepared in Preparation Example 2
(3) Second matrix resin: Second matrix resin prepared in Preparation Example 3
(4) UV absorber 1: 2-hydroxy-4-(octyloxy)benzophenone (2-hydroxy-4-(octyloxy)benzophenone) (Global Planning Co., Ltd., BPH, CAS No. 1843-05-6)
(5) UV absorber 2: 2,2'-dihydroxy-4-methoxybenzophenone (2,2'-dihydroxy-4-methoxybenzophenone) (Sigma Aldrich, CAS No. 131-53-3)
(6) UV absorber 3: 2-(2-hydroxy-5-tert-octylphenyl)benzotriazole (2-(2-hydroxy-5-tert-octylphenyl)benzotriazole) (Global Planning Co., Ltd., UV-329, CAS No. 3147-75-9)
(7) UV absorber 4: Bis(2,2,6,6-tetramethyl-4-piperidinyl)decanedioate (bis(2,2,6,6-tetramethyl-4-piperidinyl)decanedioate) (Global Planning Co., Ltd., UV-770, CAS No. 52829-07-9)

[Table 1]

| Item | | Example | | | | | | |
|---|---|---|---|---|---|---|---|---|
| | | 1 | 2 | 3 | 4 | 5 | 6 | 7 |
| Graft copolymer | (Parts by weight) | 30 | 30 | 30 | 30 | 30 | 30 | 30 |
| First matrix resin | (Parts by weight) | 30 | 30 | 30 | 30 | 30 | 30 | - |
| Second matrix resin | (Parts by weight) | 40 | 40 | 40 | 40 | 40 | 40 | 70 |
| UV absorber 1 | (Parts by weight) | 0.5 | 0.2 | 0.05 | 0.1 | - | - | 0.2 |
| UV absorber 2 | (Parts by weight) | - | - | - | - | 0.2 | - | - |
| UV absorber 3 | (Parts by weight) | - | - | - | - | - | 0.2 | - |

[Table 2]

| Item | | Example | | | | | |
|---|---|---|---|---|---|---|---|
| | | 8 | 9 | 10 | 11 | 12 | 13 |
| Graft copolymer | (Parts by weight) | 5 | 10 | 20 | 40 | 50 | 60 |
| First matrix resin | (Parts by weight) | 55 | 50 | 40 | 20 | 10 | - |
| Second matrix resin | (Parts by weight) | 40 | 40 | 40 | 40 | 40 | 40 |
| UV absorber 1 | (Parts by weight) | 0.2 | 0.2 | 0.2 | 0.2 | 0.2 | 0.2 |
| UV absorber 2 | (Parts by weight) | - | - | - | - | - | - |
| UV absorber 3 | (Parts by weight) | - | - | - | - | - | - |

[Table 3]

| Item | | Comparative Example | | | |
|---|---|---|---|---|---|
| | | 1 | 2 | 3 | 4 |
| Graft copolymer | (Parts by weight) | 30 | 30 | 30 | 30 |
| First matrix resin | (Parts by weight) | 70 | 70 | 30 | 30 |
| Second matrix resin | (Parts by weight) | - | - | 40 | 40 |
| UV absorber 1 | (Parts by weight) | - | 0.2 | - | - |
| UV absorber 4 | (Parts by weight) | - | - | - | 0.2 |

**Experimental Example**

**Experimental Example 1**

Pellets prepared in Examples 1 to 13 and Comparative Examples 1 to 4, and specimens prepared by injecting the pellets at an injection temperature of 210 °C using an injector were used to determine transparency, melt index, impact strength, tensile properties, flexural properties, and weather resistance in the following manner and the results are shown in Tables 4 to 6 below.

* Transparency: The prepared specimen was stored at 25 °C and a relative humidity of $50\pm5\%$ for 12 hours, and then in accordance with ASTM D1003, using HZ-V3 from SUGA, total light transmittance Tt (%) and haze (%) for a specimen having an area of 80 mm X 40 mm and a thickness of 3.0 mm were measured.

* Color coordinate: The prepared specimen was stored at 25 °C and a relative humidity of $50\pm5\%$ for 12 hours, using Ultrascan PRO from Hunter Lab, color coordinate values (L, a, and b) in a CIE LAB color space for a specimen having an area of 40 mm X 80 mm and a thickness of 3.0 mm were measured.

* Impact strength (J/m): The prepared specimen was stored at 25 °C and a relative humidity of $50\pm5\%$ for 12 hours, and then in accordance with ASTM D256, using IT504/104 from TINIUS-OLSEN, the notched Izod impact strength at room temperature (25 °C) for 1/4" and 1/8" thick notched specimens was measured.

* Melt index (g/10 min): Using the pellets prepared in Examples 1 to 13 and Comparative Examples 1 to 4, in accordance with ASTM D1238, the melt index under a load of 10 kg at 220 °C was measured.

* Tensile property: The prepared specimen was stored at 25 °C and a relative humidity of $50\pm5\%$ for 12 hours, and then in accordance with ASTM D638, using a universal testing machine from Zwick/roell, tensile strength (MPa) and elongation (%) for a specimen having an area of 13 mm X 115 mm and a thickness of 3 mm at a crosshead rate of 50 mm/min were measured.

* Flexural property: The prepared specimen was stored at 25 °C and a relative humidity of $50\pm5\%$ for 12 hours, and then in accordance with ASTM D790, using a universal testing machine from Zwich/roell, flexural strength (MPa) and flexural modulus (MPa) for a specimen having an area of 25 mm X 80 mm and a thickness of 3.2 mm were measured.

* The prepared specimen was stored at 25 °C and a relative humidity of $50\pm5\%$ for 12 hours, and then using UV-A from AMETEK, it was exposed to 150 After exposure for a period of time, a specimen having an area of 40 mm X 80 mm and a thickness of 3.2 mm was exposed to UV light with a light intensity of 0.77 W/m$^2$ for 150 hours and weather resistance thereof was measured. In this case, the weather resistance was determined according to Equation 1 below.

[Equation 1]

$$\triangle E = \{(L-L')^2 + (a-a')^2 + (b-b')^2\}^{1/2}$$

In Equation 1 above, L, a, and b indicate color coordinate values in a CIE LAB color space of a specimen before UV exposure, and L', a' and b' indicate color coordinate values in a CIE LAB color space of a specimen after UV exposure.

[Table 4]

| Item | | | Example | | | | | | |
|---|---|---|---|---|---|---|---|---|---|
| | | | 1 | 2 | 3 | 4 | 5 | 6 | 7 |
| Transpa rency | Total light transmittan ce | (%) | 91.8 | 91.8 | 91.5 | 91.8 | 91.6 | 91.6 | 91.7 |
| | Haze | (%) | 2.1 | 2.0 | 1.9 | 2.0 | 2.0 | 1.8 | 2.1 |

(continued)

| Item | | | Example | | | | | | |
|---|---|---|---|---|---|---|---|---|---|
| | | | 1 | 2 | 3 | 4 | 5 | 6 | 7 |
| Color coordinate | L | | 96.8 | 96.8 | 95.8 | 96.8 | 95.8 | 95.5 | 96.8 |
| | a | | -1.8 | -1.6 | -1.6 | -2.0 | -1.8 | -1.8 | -1.9 |
| | b | | 4.3 | 3.5 | 2.5 | 3.5 | 3.5 | 3.5 | 3.4 |
| Impact strength | 1/4" | (J/m) | 11.4 | 11.8 | 11.5 | 11.8 | 11.1 | 11.0 | 11.8 |
| | 1/8" | (J/m) | 13.1 | 13.2 | 12.5 | 13.2 | 12.5 | 12.8 | 13.6 |
| Melt index | | (g/10 min) | 25.8 | 25.8 | 26.0 | 25.8 | 26.0 | 25.8 | 26.0 |
| Tensile property | Tensile strength | (MPa) | 527 | 526 | 523 | 526 | 520 | 520 | 520 |
| | Elongation | (%) | 34 | 34 | 35 | 34 | 32 | 42 | 32 |
| Flexural property | Flexural strength | (MPa) | 839 | 829 | 872 | 829 | 872 | 863 | 870 |
| | Flexural modulus | (MPa) | 26,200 | 26,100 | 27,200 | 26,100 | 25,900 | 26,100 | 26,800 |
| Weather resistance | | ΔE | 1.6 | 2.8 | 3.3 | 3.0 | 2.8 | 3.1 | 3.1 |

[Table 5]

| Item | | | Example | | | | | |
|---|---|---|---|---|---|---|---|---|
| | | | 8 | 9 | 10 | 11 | 12 | 13 |
| Transparency | Total light transmittance | (%) | 92.0 | 92.0 | 92.0 | 91.5 | 91.0 | 90.8 |
| | Haze | (%) | 1.1 | 1.4 | 1.8 | 2.4 | 2.8 | 3.4 |
| Color coordinate | L | | 97.5 | 97.6 | 97.0 | 96.5 | 96.0 | 95.1 |
| | a | | -1.0 | -1.1 | -1.2 | -1.6 | -1.7 | -1.8 |
| | b | | 1.8 | 2.0 | 2.1 | 4.2 | 5.8 | 6.3 |
| Impact strength | 1/4" | (J/m) | 2.1 | 2.7 | 7.7 | 17.8 | 24.2 | 28.2 |
| | 1/8" | (J/m) | 2.3 | 2.9 | 7.9 | 18.1 | 25.1 | 30.2 |
| Melt index | | (g/10 min) | 46.4 | 43.4 | 30.2 | 20.0 | 15.0 | 7.0 |
| Tensile property | Tensile strength | (MPa) | 698 | 667 | 599 | 498 | 450 | 324 |
| | Elongation | (%) | 11.1 | 16.8 | 16.2 | 19.2 | 25.5 | 34.6 |
| Flexural property | Flexural strength | (MPa) | 1,120 | 1,180 | 982 | 712 | 652 | 518 |
| | Flexural modulus | (MPa) | 35,600 | 24,500 | 31,300 | 23,000 | 19,900 | 15,800 |
| Weather resistance | | ΔE | 2.5 | 2.6 | 2.8 | 3.1 | 3.1 | 3.2 |

[Table 6]

| Item | | | Comparative Example | | | |
|---|---|---|---|---|---|---|
| | | | 1 | 2 | 3 | 4 |
| Transparen cy | Total light transmittance | (%) | 91.9 | 91.9 | 91.8 | 91.6 |
| | Haze | (%) | 2.1 | 2.2 | 2.0 | 2.3 |
| Color coordinate | L | | 97.1 | 96.5 | 96.6 | 95.6 |
| | a | | -1.3 | -1.7 | -1.9 | -1.9 |
| | b | | 2.2 | 3.3 | 3.5 | 3.5 |
| Impact strength | 1/4" | (J/m) | 10.7 | 11.0 | 11.3 | 11.7 |
| | 1/8" | (J/m) | 12.5 | 12.1 | 13.0 | 12.8 |
| Melt index | | (g/10 min) | 26.1 | 26.8 | 26.0 | 26.7 |
| Tensile property | Tensile strength | (MPa) | 539 | 538 | 523 | 524 |
| | Elongation | (%) | 25 | 23 | 39 | 46 |
| Flexural property | Flexural strength | (MPa) | 870 | 860 | 867 | 877 |
| | Flexural modulus | (MPa) | 27,10 0 | 27,20 0 | 27,30 0 | 27,40 0 |
| Weather resistance | | ∆E | 5.6 | 3.5 | 9.4 | 7.6 |

As shown in Tables 4 to 6 above, it is determined that although transparent resin compositions prepared in Examples 1 to 7 included second matrix resins including chemically recycled monomers, the transparent resin compositions exhibited the same level of transparency and processability as a transparent resin composition of Comparative Example 1 prepared using a virgin monomer alone and not including a UV absorber, and had excellent mechanical properties as well as weather resistance.

In particular, it is determined that the transparent resin compositions of Examples 1 to 5 and 7 prepared including a benzophenone-based UV absorber as a UV absorber exhibited further greater transparency than a transparent resin composition of Example 6 prepared including a benzotriazole-based UV absorber as a UV absorber.

In addition, it is determined that although the transparent resin composition of Example 7 did not include a first matrix resin prepared using a virgin monomer alone as a matrix resin, and only included a second matrix resin including a chemically recycled monomer, the transparent resin composition of Example 7 exhibited the same level of transparency, processability, mechanical properties, and weather resistance as the transparent resin composition of Example 2 including a first matrix resin and the same amount of a benzophenone-based UV absorber.

In addition, Examples 8 to 13, in which the amount of a graft copolymer in the transparent resin composition was different from that of Example 2, showed that a value of b, processability, and mechanical properties changed according to the amount of a rubber polymer included in the graft copolymer, but the change was only limited to the amount of the rubber polymer contained in the graft copolymer, and it is determined that transparency according to a second matrix resin including a chemically recycled monomer and improvement in weather resistance according to a benzophenone-based UV absorber remained the same level.

Meanwhile, it is determined that the transparent resin composition of Comparative Example 2 further including a benzophenone-based UV absorber exhibited a slight improvement in weather resistance with the inclusion of the benzophenone-based UV absorber with respect to the transparent resin composition of Comparative Example 1, but failed to show a sufficient improvement in weather resistance as much as the transparent resin compositions of Examples 1 to 13.

In addition, it is determined that the transparent resin composition of Comparative Example 3 including a second matrix resin containing a chemically recycled monomer in the same amount as in Examples 1 to 6, but not including a UV absorber had significantly lower weather resistance than the transparent resin composition of Comparative Example 1.

In addition, it is determined that the transparent resin composition of Comparative Example 4 including a second matrix resin containing a chemically recycled monomer as in Examples 1 to 6 and including a hindered amine light stabilizer (HALS)-based UV absorber as a UV absorber had a slightly improved weather resistance compared to the transparent resin composition of Comparative Example 3, but still had lower weather resistance than the transparent resin composition of Comparative Example 1.

The results indicate that when a transparent resin composition including a second matrix resin containing a chemically recycled monomer does not include a UV absorber as in the transparent resin composition of Comparative Example 3, weather resistance is sharply reduced, and even when a UV absorber is included to tackle the issue, unlike the present invention, unless a suitable UV absorber is included, weather resistance may not be sufficiently improved.

Meanwhile, apart from the above experiment, carbon footprint was determined from emissions of carbon dioxide (unit: $kgCO_2$/kg) as a greenhouse gas derived when the transparent resin compositions were prepared according to Examples 1 to 6, and the results show that the carbon dioxide generated emissions were reduced to at least 7 wt% compared to the carbon dioxide emissions (unit: $kgCO_2$/kg) derived when the transparent resin composition was prepared according to Comparative Example 1.

Based on the results, it is determined that the transparent resin composition according to the present invention includes a matrix resin containing a chemically recycled monomer unit to reduce carbon emissions, and thus is eco-friendly and exhibits excellent mechanical properties and weather resistance.

**Claims**

1. A transparent resin composition comprising:

   a transparent graft copolymer comprising a rubber polymer;
   a transparent matrix resin; and
   a UV absorber,
   wherein the transparent matrix resin comprises a chemically recycled alkyl (meth)acrylate-based monomer unit, and
   the UV absorber comprises at least one selected from the group consisting of a benzophenone-based UV absorber and a benzotriazole-based UV absorber.

2. The transparent resin composition of claim 1, wherein the transparent graft copolymer comprises a conjugated diene-based rubber polymer, an alkyl (meth)acrylate-based monomer unit, an aromatic vinyl-based monomer unit, and a vinyl cyan-based monomer unit.

3. The transparent resin composition of claim 1, wherein the transparent graft copolymer is in an amount of 5 parts by weight to 60 parts by weight with respect to 100 parts by weight of a total amount of the transparent graft copolymer and the transparent matrix resin.

4. The transparent resin composition of claim 1, wherein the transparent matrix resin is in an amount of 40 parts by weight to 95 parts by weight with respect to 100 parts by weight of a total amount of the transparent graft copolymer and the transparent matrix resin.

5. The transparent resin composition of claim 1, wherein the transparent matrix resin includes a first transparent matrix resin and a second transparent matrix resin,
   the second transparent matrix resin includes the chemically recycled alkyl (meth)acrylate-based monomer unit.

6. The transparent resin composition of claim 5, wherein the first transparent matrix resin comprises an alkyl (meth)acrylate-based monomer unit, an aromatic vinyl-based monomer unit, and a vinyl cyan-based monomer unit.

7. The transparent resin composition of claim 5, wherein the second transparent matrix resin comprises a chemically recycled alkyl (meth)acrylate-based monomer unit, an aromatic vinyl-based monomer unit, and a vinyl cyan-based monomer unit.

8. The transparent resin composition of claim 5, wherein the first transparent matrix resin is in an amount of 10 parts by weight to 70 parts by weight with respect to 100 parts by weight of a total amount of the transparent graft copolymer and the transparent matrix resin, and
   the second transparent matrix resin is in an amount of 10 parts by weight to 80 parts by weight with respect to 100 parts by weight of a total amount of the transparent graft copolymer and the transparent matrix resin.

9. The transparent resin composition of claim 1, wherein a chemically recycled alkyl (meth)acrylate-based monomer forming the chemically recycled alkyl (meth)acrylate-based monomer unit is chemically recycled from waste artificial marble.

**10.** The transparent resin composition of claim 1, wherein the benzophenone-based UV absorber is at least one selected from the group consisting of 2-hydroxy-4-(octyloxy)benzophenone and 2,2'-dihydroxy-4-methoxybenzophenone.

**11.** The transparent resin composition of claim 1, wherein the benzotriazole-based UV absorber is 2-(2-hydroxy-5-tert-octylphenyl)benzotriazole.

**12.** The transparent resin composition of claim 1, wherein the UV absorber is in an amount of 0.01 parts by weight to 1.00 parts by weight with respect to 100 parts by weight of a total amount of the transparent graft copolymer and the transparent matrix resin.

**13.** A molded article molded from the transparent resin composition according to any one of claims 1 to 12.

## INTERNATIONAL SEARCH REPORT

| International application No. |
| --- |
| **PCT/KR2022/014683** |

| | |
| --- | --- |
| **A.** | **CLASSIFICATION OF SUBJECT MATTER** |

**C08L 51/04**(2006.01)i; **C08L 101/00**(2006.01)i; **C08K 5/132**(2006.01)i; **C08K 5/3475**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

C08L 51/04(2006.01); C08F 279/02(2006.01); C08L 53/02(2006.01); C08L 55/02(2006.01); C09D 133/08(2006.01); C09D 5/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그래프트 공중합체(graft copolymer), 화학적 재활용(chemically recycle), 알킬 (메트)아크릴레이트(alkyl (meth)acrylate), 자외선 흡수제(ultraviolet absorber), 내후성(weathering)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | KR 10-2019-0038347 A (LG CHEM, LTD.) 08 April 2019 (2019-04-08)<br>See abstract; claims 1-17; and paragraphs [0005]-[0094]. | 1-13 |
| Y | POUDEL, J. et al. Methyl methacrylate (MMA) and alumina recovery from waste artificial marble powder pyrolysis. Journal of Material Cycles and Waste Management. 2021, vol. 23, no. 1, pp. 214-221 (publication date: 26 September 2020).<br>See abstract; and page 215. | 1-13 |
| Y | BAILEY, M. LG Chem and Veolia R&E partner to produce ABS resin from recycled materials. CHEMICAL ENGINEERING. [online]. [retrieved on 28 December 2022]. Retrieved from the internet: <URL: https://www.chemengonline.com/lg-chem-and-veolia-re-partner-to-produce-abs-resin-from-recycled-materials/?printmode=1>. pp. 1-6 (publication date: 30 August 2021).<br>See pages 1-2. | 1-13 |
| A | KR 10-0161649 B1 (PPG INDUSTRIES. INC.) 15 January 1999 (1999-01-15)<br>See entire document. | 1-13 |

| | | | |
| --- | --- | --- | --- |
| ✓ | Further documents are listed in the continuation of Box C. | ✓ | See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 January 2023** | **10 January 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2022/014683** |

### C. DOCUMENTS CONSIDERED TO BE RELEVANT

| Category* | Citation of document, with indication, where appropriate, of the relevant passages | Relevant to claim No. |
|---|---|---|
| A | WO 2021-110751 A1 (INEOS STYROLUTION GROUP GMBH) 10 June 2021 (2021-06-10)<br>See entire document. | 1-13 |

Form PCT/ISA/210 (second sheet) (July 2022)

**INTERNATIONAL SEARCH REPORT**
Information on patent family members

International application No.

**PCT/KR2022/014683**

| Patent document cited in search report | | | Publication date (day/month/year) | Patent family member(s) | | | Publication date (day/month/year) |
|---|---|---|---|---|---|---|---|
| KR | 10-2019-0038347 | A | 08 April 2019 | CN | 110914361 | A | 24 March 2020 |
| | | | | CN | 110914361 | B | 19 August 2022 |
| | | | | EP | 3640297 | A2 | 22 April 2020 |
| | | | | EP | 3640297 | A4 | 17 June 2020 |
| | | | | KR | 10-2161030 | B1 | 05 October 2020 |
| | | | | US | 11267964 | B2 | 08 March 2022 |
| | | | | US | 2020-0140672 | A1 | 07 May 2020 |
| | | | | WO | 2019-066375 | A2 | 04 April 2019 |
| | | | | WO | 2019-066375 | A3 | 23 May 2019 |
| KR | 10-0161649 | B1 | 15 January 1999 | JP | 02-242864 | A | 27 September 1990 |
| | | | | JP | 07-035485 | B2 | 19 April 1995 |
| | | | | KR | 10-0141382 | B1 | 15 June 1998 |
| | | | | KR | 10-1990-0007981 | A | 02 June 1990 |
| | | | | US | 5045396 | A | 03 September 1991 |
| | | | | US | 5199979 | A | 06 April 1993 |
| WO | 2021-110751 | A1 | 10 June 2021 | CN | 115052927 | A | 13 September 2022 |
| | | | | EP | 4069779 | A1 | 12 October 2022 |
| | | | | KR | 10-2022-0113734 | A | 16 August 2022 |

Form PCT/ISA/210 (patent family annex) (July 2022)

**EP 4 386 048 A1**

**REFERENCES CITED IN THE DESCRIPTION**

**Patent documents cited in the description**

- KR 1020210130840
- KR 1020120088090 A

- IT 504104

**Non-patent literature cited in the description**

- *CHEMICAL ABSTRACTS,* 1843-05-6
- *CHEMICAL ABSTRACTS,* 131-53-3

- *CHEMICAL ABSTRACTS,* 3147-75-9
- *CHEMICAL ABSTRACTS,* 52829-07-9